# EUROPÄISCHE PATENTSCHRIFT

(11) **EP 1 360 537 B1**
(45) Veröffentlichungstag und Bekanntmachung des Hinweises auf die Patenterteilung: **15.09.2004**
(21) Anmeldenummer: 02701280.6
(22) Anmeldetag: 15.02.2002
(51) Int. Cl.: G02B 21/00

(54) **MIKROSKOP**
MICROSCOPE
MICROSCOPE

(30) Priorität: 16.02.2001 DE 10107210
(43) Veröffentlichungstag der Anmeldung: 12.11.2003
(73) Patentinhaber: Evotec OAI AG, 22525 Hamburg (DE)
(72) Erfinder: MÜLLER, Jürgen, 22529 Hamburg (DE)
(74) Vertreter: von Kirschbaum, Alexander, Dipl.-Ing.
(86) Internationale Anmeldenummer: PCT/EP2002/001610
(87) Internationale Veröffentlichungsnummer: WO 2002/067037

(56) Entgegenhaltungen:
- EP-A- 0 284 136
- WO-A-98/28646
- US-A- 5 225 671
- US-A- 5 334 830

## Beschreibung

Die Erfindung betrifft ein Mikroskop, insbesondere ein konfokales Mikroskop zur Einzelmolekülspektroskopie. Unter Mikroskop wird im folgenden jede Art von Vergrößerungseinrichtung aus zwei Linsenanordnungen verstanden.

Konfokale Mikroskope sind insbesondere zur hochauflösenden Messung in Richtung der Z-Achse, d.h. in Längsrichtungen des Strahlengangs des Mikroskops geeignet. Hierzu weisen konfokale Mikroskope eine Beleuchtungseinheit auf, bei der es sich üblicherweise um einen Laser handelt. Von der Beleuchtungseinheit wird eine von einer Probenaufnahmeeinrichtung aufgenommene Probe beleuchtet. Hierzu ist eine Optikeinheit vorgesehen, die von der Beleuchtungseinheit erzeugte Strahlung in Richtung der Probe und von der Probe abgegebene Strahlung in Richtung einer Detektoreinheit lenkt. Herkömmliche konfokale Mikroskope weisen als Bestandteil der Optik einen Strahlteiler auf. Von dem Strahlteiler wird einerseits das von der Beleuchtungseinheit kommende Licht in Richtung der Probe gelenkt und anderseits das von der Probe reflektierte Licht hindurchgelassen, um durch eine Aperturblende zu einer im Strahlengang hinter dem Strahlteiler angeordneten Detektoreinheit zu gelangen. Bei der Beleuchtungseinheit kann es sich um unterschiedliche Beleuchtungseinheiten handeln, die beispielsweise sichtbares Licht oder auch Wellenlängen im nicht sichtbaren Bereich erzeugen. Vor der Detektoreinheit ist eine Aperturblende und vor dieser eine Fokussierlinse angeordnet.

Durch die Fokussierlinse wird der Strahlengang in der Öffnung der Aperturblende fokussiert.

Durch das Fokussieren des Strahlengangs in der Öffnung der Aperturblende gelangt ein relativ hoher Lichtstrom zu dem Detektor. Bereits geringe Defokussierung durch Verlagerung der Objektebene in Z-Richtung führen zu unscharfer Abbildung auf der Aperturblende. Dies hat einen geringeren Lichtstrom zur Folge, da der Fokus der Fokussierlinse nicht mehr in der Öffnung der Aperturblende fokussiert ist und somit ein geringerer Lichtstrom durch die Blendenöffnung gelangt. Ebenso führt ein Verschieben der Objektebene in der X-Y-Ebene zu einer Verschiebung des Fokus in der Ebene der Aperturblende. Hierdurch wird die durch die Aperturblende gelangende Lichtmenge reduziert, da der Fokus nicht mehr in der Öffnung der Aperturblende fokussiert ist.

Beim Einsatz von konfokalen Mikroskopen beim Hochdurchsatz-Screening wird der Fokus des Mikroskopobjektives in einer biologischen oder chemischen Probe angeordnet. Da es sich bei den Proben um Kleinstmengen an Probenflüssigkeit handelt, die ein Volumen im Mikroliterbereich oder Nanoliterbereich aufweisen, muss es sich bei dem beim Hochdurchsatz-Screening eingesetzten konfokalen Mikroskop um eine hochpräzise Vorrichtung handeln. Diese Anforderung besteht umso mehr, da bei modernen Hochdurchsatz-Screeninganlagen Proben im Submittroliterbereich untersucht werden.

Aufgrund der geforderten sehr hohen Genauigkeit der Fokussierung in der Probe führen bereits geringe Temperaturänderungen zur Dejustage des konfokalen Mikroskops. Insbesondere führt auch eine temperaturbedingte Dejustage der Aperturblende selbst zur Beeinträchtigung der Genauigkeit des Mikroskops. Bereits geringe Dejustagen führen dazu, dass der beleuchtungsseitige und der detektionsseitige Fokus nicht mehr deckungsgleich sind. Hierdurch ergibt sich eine Signalverlagerung und eine erhebliche Verfälschung der Messergebnisse. Bei der Einzelmoleküldetektion ist zusätzlich bereits bei einer geringen Dejustage die Annahme über die Fokusgeometrie nicht mehr gültig. Ferner ist die Genauigkeit der Messergebnisse durch Ungenauigkeiten des Lasers, durch die ebenfalls der Fokus verschoben wird, beeinflusst. Die Messgenauigkeit konfokaler Mikroskope wird ferner dadurch beeinflusst, dass der in der Optikeinheit vorgesehene Strahlteiler in Abhängigkeit der von dem Laser erzeugten sowie von der Probe abgegebenen Wellenlänge ausgewechselt werden muss. Beim Auswechseln treten geringe Lageänderungen des Strahlteilers auf. Dies führt ebenfalls zur Fokusverschiebung und damit zur Verfälschung der Messergebnisse. Der Strahlteiler kann sich relativ zur Anregungsoptik und dem Objektiv durch Temperatureinflüsse verstellen.

Zur Justage ist es aus US 4 863 226 bekannt, einen Justiermechanismus für die Aperturblende vorzusehen. Durch den Justiermechanismus kann die Aperturblende in Richtung der X-Y- und Z-Achse verschoben werden. Da der Abstand und die leitende Position zwischen der Aperturblende und dem hinter der Aperturblende angeordneten Detektor sehr genau eingehalten werden muss, ist es erforderlich, zusammen mit der Aperturblende die gesamte Detektoreinheit zu verschieben. Insbesondere bei modernen konfokalen Mikroskopen werden sehr aufwendige und empfindliche Detektoren wie beispielsweise Photomultipler oder spektrographische Mehrdetektor-Anordnungen eingesetzt. Dies hat zur Folge, dass die Detektoreinheit einen großen Bauraum einnimmt und schwer ist. Die genaue Positionierung der Aperturblende in Richtung der drei Achsen ist daher mit einem erheblichen mechanischen Aufwand verbunden. Hierbei muss berücksichtigt werden, dass die Justage der Aperturblende im Mikrometerbereich erfolgen muss.

Aus US 5 334 830 ist es ferner bekannt, zur Justage der Aperturblende in dem Strahlengang zusätzliche justierbare Umlenkspiegel anzuordnen. Die Ausrichtung des Fokus auf die Öffnung der Aperturblende erfolgt somit durch Verstellen der in dem Strahlengang angeordneten Umlenkspiegel. Durch das Anordnen zusätzlicher Komponenten wie transparente Keilplatten im Strahlengang treten Farbfehler sowie Reflektionsverluste auf. Ferner erhöht sich die Baulänge des Mikroskops.

Aufgabe der Erfindung ist es, ein Mikroskop zu schaffen, dass insbesondere bei hochpräzisen Anforderungen mit möglichst geringem mechanischen Aufwand gut justierbar ist.

Die Lösung der Aufgabe erfolgt erfindungsgemäß durch die Merkmale des Anspruchs 1 bzw. 6.

Erfindungsgemäß erfolgt das Justieren entweder durch ein Verstellen der Fokussierlinse durch die die von der Probe abgegebene Strahlung auf die Aperturblende fixiert wird oder durch Verstellen eines ggf. in der Optikeinheit vorgesehenen Strahlteilers. Erfindungsgemäß wird die Aperturblende somit allenfalls in Z-Richtung, d.h. in Richtung ihrer optischen Achse verschoben. Vorzugsweise ist die Aperturblende feststehend.

Der erfindungsgemäße Aufbau des Mikroskops hat den Vorteil, dass die mit erheblichem mechanischen Aufwand mögliche Justage der Aperturblende zusammen mit der Detektoreinheit in X-,Y- und Z-Richtung vermieden ist. Der Aufwand ist bereits erheblich reduziert, wenn die Aperturblende zusammen mit der Detektoreinheit ausschließlich in Richtung der Z-Achse verstellbar ist. Das Justieren des konfokalen Mikroskops durch Verstellen der Fokussierlinse und/oder des Strahlteilers ist mechanisch erheblich einfacher realisierbar.

Versuche haben gezeigt, dass entgegen der herrschenden Meinung, die durch Verstellen der Fokussierlinse und/oder des Strahlteilers auftretenden optischen Fehler vernachlässigbar gering sind.

Dies ist insbesondere auch bei konfokalen Mikroskopen der Fall. Hierbei muss durch das konfokale Mikroskop gewährleistet sein, ein möglichst kleines beugungsbegrenztes Messvolumen zu erzeugen und zu beobachten. Hierzu wird ein Objektiv mit möglichst hoher numerischer Apertur verwendet, die durch das Beleuchtungslicht voll ausgefüllt wird. Hierdurch ist der Radius des beleuchteten Fokus definiert. Die Größe des beobachteten Fokus wird an diesen Radius angepasst. Bei gegebener Brennweite der Fokuslinse, die bei typischen Mikroskopanordnungen zwischen 160 und 200 mm beträgt, lässt sich diese Anpassung durch Wahl des Durchmessers der Aperturblende erreichen. Um signifikante Verluste an detektiertem Licht sowie Asymmetrien des Messvolumens zu vermeiden, darf sich der Fokus auf der Aperturblende nur um Bruchteile des Blendendurchmessers lateral verschieben. Hieraus ergibt sich bei konfokalen Mikroskopen mit großer Auflösung beispielsweise eine Objektiv-Brennweite von f = 4 mm und eine numerische Apertur von 1,2. Bei einer Brennweite der Tubuslinse von 180 mm beträgt der Durchmesser der Aperturblende etwa 30 µm. Hieraus ergibt sich eine zulässige Verschiebung des Fokus in der X-Y-Ebene von maximal 5 µm. Diesem entspricht ein zulässiger Winkelfehler von 6".

Bei einer ersten Ausführungsform der Erfindung ist somit die Fokussierlinse senkrecht zu ihrer optischen Achse, d.h. in Richtung der X- und/oder Y-Achse verstellbar. Das Justieren in Richtung der jeweils anderen Achse in der X-Y-Ebene kann durch Verkippen des Strahlteilers erfolgen. Insbesondere bei konfokalen Mikroskopen, die keinen Strahlteiler aufweisen oder bei denen der Strahlteiler beispielsweise nicht auswechselbar ist und somit vorzugsweise in einer unverstellbaren Lage fixiert ist, erfolgt die Fokussierung bezüglich der X-Y-Ebene ausschließlich durch Verschieben der Fokussierlinse in dieser Ebene.

Bei dieser Ausführungsform kann die Justierung in Richtung der Z-Achse durch Verschieben der Aperturblende zusammen mit der Detektoreinheit erfolgen. Besonders bevorzugt ist es jedoch auch, die Justierung in Richtung der Z-Achse durch Verschieben der Fokussierlinse in Richtung ihrer optischen Achse, d.h. in Richtung der Z-Achse zu realisieren.

Das Justieren in der X-Y-Ebene ist ferner durch ein Verstellen des Strahlteilers, vorzugsweise durch Verkippen des Strahlteilers möglich. Hierdurch kann der Strahlengang auf die Mittelachse der Öffnung der Aperturblende ausgerichtet werden. Das Verstellen des Strahlteilers kann zusätzlich zu den Verstellmöglichkeiten der Fokussierlinse erfolgen.

Bei einer weiteren bevorzugten Ausführung der Erfindung ist lediglich der Strahlteiler verkippbar. Durch Verkippen des Strahlteilers kann eine Justierung in der X-Y-Ebene erfolgen. Bei dieser Ausführungsform ist die Fokussierlinse feststehend. Zur Justierung in Z-Richtung ist die Aperturblende zusammen mit der Detektoreinheit verschiebbar. Die Verwendung konfokaler Mikroskope im Hochdurchsatz-Screening erfordert die Erfüllung spezieller Anforderungen, um einerseits den Durchsatz zu erhöhen, d.h. die Messzeiten jeder einzelnen Probe möglichst zu verringern. Die Ausbeute des Fluoreszenzlichts durch den Detektor muss daher optimiert werden. Dies bedeutet, dass die numerische Apertur der Detektionsoptik die Transmission aller optischen Komponenten im Detektionspfad zumindest im relevanten Spektralbereich sowie die Quantenausbeute des Detektors optimiert sein müssen. Das erfindungsgemäße Mikroskop weist diesbezüglich den Vorteil auf, dass die Justage der Detektionsoptik ohne zusätzliche Komponenten, wie etwa einen Umlenkspiegel oder eine Keilplatte erfolgen. Dies hat den Vorteil, dass aufgrund dieser zusätzlichen Komponenten auftretende optische Verluste nicht auftreten.

Ferner werden derartige Mikroskope im Hochdurchsatz-Screening häufig eingesetzt, um mehrere Parameter, beispielsweise die Intensität bei unterschiedlichen Wellenlängen oder die Polarisationsrichtungen analysieren zu können. Da bei Abklingen der Fluoreszenz die Messergebnisse beeinträchtigt werden, sollten diese Parameter möglichst gleichzeitig gemessen werden. Dies hat einen äußerst komplexen Detektoraufbau zur Folge. Da die Detektoreinheit erfindungsgemäß nicht oder nur in eine bestimmte Richtung zusammen mit der Aperturblende bewegt werden muss, weist das erfindungsgemäße Mikroskop gegenüber bestehenden Mikroskopen einen erheblichen Vorteil auf, da insbesondere das Bewegen großer Massen in engen Toleranzbereichen nicht erforderlich ist.

Aufgrund der vorstehend beschriebenen Vorteile ist das erfindungsgemäße Mikroskop insbesondere für die Einzelmoleküldetektion geeignet. Die Einzelmoleküldetektion ist insbesondere für das Hochdurchsatz-Screening geeignet, da die Messung an geringen Substanzmengen durchgeführt werden kann. Vorstehend beschriebene Vorteile wirken sich hierbei insbesondere auch besonders vorteilhaft aus, da die einzelnen Moleküle nur schwache Signale abgeben. Das Beeinträchtigen schwacher Signale durch zusätzliche optischen Elemente führt zu einer erheblichen Verfälschung der Messergebnisse.

Ferner besteht insbesondere bei konfokalen Mikroskopen die Anforderung, dass die Überlappung der Beleuchtungs- und Detektionsfoki übereinstimmt. Um dies zu realisieren ist über die gesamte Screeningdauer eine möglichst symmetrische und konstante Geometrie erforderlich. Dies liegt darin begründet, dass Modellannahmen über die Messvolumen-Geometrie derart in die Auswertung der Messung und damit in die Bestimmung der gesuchten Einzelmoleküleigenschaften eingehen. Hieraus ergibt sich insbesondere die Forderung nach zeitlicher Stabilität der Messanordnung bzw. nach der Möglichkeit einer regelmäßigen ggf. automatischen Nachjustierung der Detektionsoptik. Dies ist mit dem erfindungsgemäßen Mikroskop möglich.

Die Öffnung der Aperturblende kann beispielsweise kreisrund oder spaltförmig sein. Insbesondere bei einer spaltförmigen Öffnung der Aperturblende ist es vorteilhaft, ein Drehen der Aperturblende um ihre Mittelachse zu ermöglichen. Hierdurch kann durch einfaches Verdrehen der Aperturblende die spaltförmige Öffnung der Aperturblende ausgerichtet werden.

Besonders bevorzugt ist ein automatisches Justieren des Mikroskops. Hierzu weist die Fokussierlinse und/oder der Strahlteiler einen Justiermechanismus auf, der über geeignete Ansteuerungselemente, z.B. Schrittmotoren oder Gleichstrommotor mit Positions-Encoder, ein Verstellen der Fokussierlinse und/oder des Strahlteilers ermöglicht. Zusätzlich kann ggf. ein Justiermechanismus zum Verschieben der Aperturblende zusammen mit der Detektoreinheit in Richtung der Z-Achse vorgesehen sein. Die Justagetoleranz bezüglich der Öffnung der Aperturblende ist vorzugsweise kleiner als 3 µm besonders bevorzugt kleiner als 2 µm.

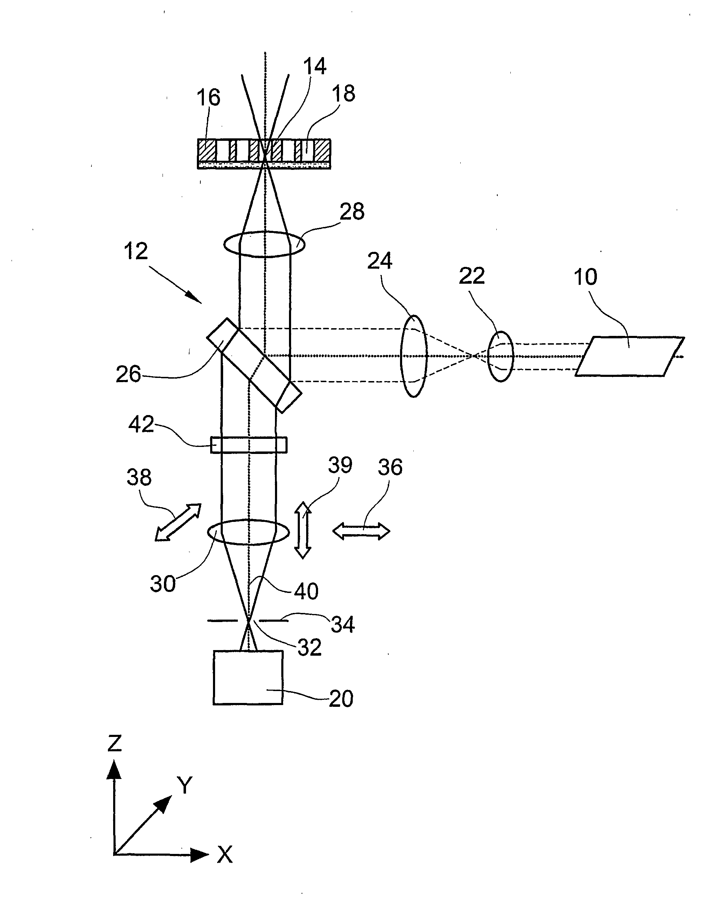

Nachfolgend wird die Erfindung anhand einer bevorzugten Ausführungsform unter Bezugnahme auf die anliegende Zeichnung näher erläutert. Die Zeichnung zeigt einen schematischen Aufbau eines erfindungsgemäßen konfokalen Mikroskops.

Das konfokale Mikroskop weist als Beleuchtungseinheit einen Laser 10 auf. Das von dem Laser 10 abgegebene Licht wird durch eine Optikeinheit 12 auf eine in einer Vertiefung 14 eines Probenträgers 16, wie einer Titerplatte angeordneten Probe 18 gelenkt.

Die von der Probe 18 reflektierte Strahlung wird von der Optikeinheit 12 in Richtung eines Detektors 20 gelenkt.

Im dargestellten Ausführungsbeispiel umfasst die Optikeinheit Linsen 22,24, durch die die von dem Laser 10 ausgehende Strahlung auf einen Strahlteiler 26 gelenkt wird. Von dem Strahlteiler 26 wird die Strahlung in Richtung der Probe 18 reflektiert. Durch ein zwischen dem Strahlteiler 26 und der Probe 18 angeordnetes Mikroskopobjektiv 28 wird die Strahlung in die Probe 18 fokussiert.
Die von der Probe 18 reflektierte Strahlung gelangt durch das Mikroskopobjektiv 28 hindurch wiederum zum Strahlteiler 26. Die von der Probe abgegebene Strahlung wird von dem Strahlteiler 26 hindurchgelassen und in Richtung einer Fokussierlinse 30 gelenkt. Bei der Detektion von Fluoreszenzlicht wird als Strahlteiler ein dichromatischer Strahlteiler (Langpass) eingesetzt. Es kann sich auch um einen halbdurchlässigen (nicht wellenlängenselektiven) Spiegel handeln.

Durch die Fokussierlinse 30 wird die Strahlung in die Öffnung 32 einer Aperturblende 34 fokussiert. Nachdem die Strahlung die Aperturblende 34 passiert hat, trifft sie auf einen in der Detektoreinheit 20 vorgesehenen Detektor.

In der dargestellten Ausführungsform ist zur Justierung des konfokalen Mikroskops die Fokussierlinse 30 in Richtung des Pfeils 36, d.h. in X-Richtung, in Richtung des Pfeils 38, d.h. in Y-Richtung sowie in Richtung des Pfeils 39, d.h. in Z-Richtung verschiebbar. Es ist somit möglich, durch einen einzigen Justiermechanismus, durch den die Fokussierlinse 30 in Richtung der drei Achsen verschiebbar ist, den Strahlengang derart zu fokussieren, dass der Fokus in der Öffnung 32 der Aperturblende 34 angeordnet ist. Im Idealfall liegt der Fokus somit auf einer Mittelachse 40 des Strahlengangs. Bei der Mittelachse 40 handelt es sich ferner um die Mittelachse der Aperturöffnung 32. Durch die Justierung in Z-Richtung ist der Fokus im Idealfall auf die Höhe der Aperturblende 34 bezogen ebenfalls zentriert, so dass eine optimale Lichtausbeute verwirklicht ist.

Um die geforderte Präzision der Einstellung der Fokussierlinse 30 zu ermöglichen, ist die Fokussierlinse vorzugsweise durch ein Linearkugellager gelagert. Eine gute Führung der Fokussierlinse 30 kann auch durch eine Parallelogrammführung erreicht werden, die bei geringem Aufwand ebenfalls eine spielfreie Führung gewährleistet. Eine weitere Möglichkeit zur Lagerung der Fokussierlinse besteht in Dreipunktlagerung, die beispielsweise eine V-Nut und zwei Justageschrauben aufweist, wobei ein Lager federnd ausgebildet ist. Die Dreipunktlagerung hat den Vorteil, dass sie kompakt ausgebildet sein kann und bei geringem Aufwand eine spielfreie Lagerung ermöglicht. Hierzu muss die Federung in Richtung der optischen Achse spielfrei sein.

Bei Ausführungsformen, bei denen die Justierung nicht über ein ausschließliches Verstellen der Fokussierlinse 30 erfolgt, ist der Strahlteiler 26 kippbar. Das Kippen des Strahlteilers erfolgt um die X- sowie um die Y-Achse. Bei diesen Ausführungsformen ist zusätzlich eine Justierung in Richtung der Z-Achse erforderlich, die entweder durch Verschieben der Fokussierlinse 30 oder der Aperturblende 34 zusammen mit der Detektoreinheit 20 realisiert werden kann.

Ferner kann im Strahlengang ein Filter 42 vorgesehen sein. Wenn es sich bei dem Filter 42 um einen auswechselbaren Filter handelt, kann durch das Auswechseln der Verlauf des Strahlengangs beeinflusst werden. Hierdurch wird eine Justage erforderlich. Diese kann mit der erfindungsgemäßen Vorrichtung, vorzugsweise automatisch durch Justieren der Fokussierlinse 30 erfolgen.

## Patentansprüche

1. Mikroskop, insbesondere konfokales Mikroskop zur Einzelmolekül-Spektroskopie, mit
einer Probenaufnahmeeinrichtung zur Aufnahme einer Probe (18),
einer Beleuchtungseinheit (10),
einer Optikeinheit (12), die von der Beleuchtungseinheit (10) erzeugte Strahlung in Richtung der Probe (18) und von der Probe (18) abgegebene Strahlung in Richtung einer Detektoreinheit (20) lenkt,
einer im Strahlengang vor der Detektoreinheit (20) angeordneten Aperturblende (34) und
einer im Strahlengang vor der Aperturblende (34) angeordneten Fokussierlinse (30),
**dadurch gekennzeichnet,**
**dass** die Fokussierlinse (30) senkrecht zu ihrer optischen Achse verstellbar ist.

2. Mikroskop nach Anspruch 1, **dadurch gekennzeichnet, dass** die Fokussierlinse (30) zusätzlich in Richtung ihrer optischen Achse verstellbar ist.

3. Mikroskop nach Anspruch 1 oder 2, **dadurch gekennzeichnet, dass** die Optikeinheit (12) zum Lenken der Strahlung einen Strahlteiler (26) aufweist und der Strahlteiler (26) verkippbar ist, um den Strahlengang auf die Mittelachse (40) der Öffnung (32) der Aperturblende (34) auszurichten.

4. Mikroskop nach Anspruch 3, **dadurch gekennzeichnet, dass** der Strahlteiler (26) auswechselbar ist.

5. Mikroskop nach einem der Ansprüche 1-4, **dadurch gekennzeichnet, dass** die Fokussierlinse (30) durch Linearkugellager, Parallelogrammführung und/oder Dreipunktlagerung gelagert ist.

6. Mikroskop, insbesondere konfokales Mikroskop zur Einzelmolekül-Spektroskopie, mit
einer Probenaufnahmeeinrichtung zur Aufnahme einer Probe,
einer Beleuchtungseinheit (10),
einer einen Strahlteiler (26) aufweisen Optikeinheit (12), die von der Beleuchtungseinheit (10) erzeugte Strahlung in Richtung der Probe (18) und von der Probe (18) abgegebene Strahlung in Richtung einer Detektoreinheit (20) lenkt,
einer im Strahlengang vor der Detektoreinheit (20) angeordneten Aperturblende (34) und
einer im Strahlengang vor der Aperturblende (34) angeordneten feststehenden Fokussierlinse (30),
**dadurch gekennzeichnet,**
**dass** der Strahlteiler (26) verkippbar ist, um die von der Probe (19) abgegebene Strahlung auf die Mittelachse (40) der Öffnung der Aperturblende (34) auszurichten.

7. Mikroskop nach einem der Ansprüche 1-6, **dadurch gekennzeichnet, dass** die Aperturblende (34) ausschließlich in Längsrichtung des Strahlengangs zum Einstellen des Abstandes zwischen der Fokussierlinse (30) und der Aperturblende (34) verschiebbar ist.

8. Mikroskop nach einem der Ansprüche 1-7, **dadurch gekennzeichnet, dass** die Aperturblende (34) um ihre Mittelachse (40) drehbar ist.

9. Mikroskop nach einem der Ansprüche 1-6, **dadurch gekennzeichnet, dass** die Aperturblende (34) feststehend ist.

10. Mikroskop nach einem der Ansprüche 1-9, **dadurch gekennzeichnet, dass** die Öffnung (32) der Aperturblende (34) kreisrund oder spaltförmig ist.

11. Mikroskop nach einem der Ansprüche 1-10, **dadurch gekennzeichnet, dass** die Fokussierlinse (30) und/oder Strahlteiler (26) mit einem Justiermechanismus zum automatischen Justieren verbunden ist.

12. Mikroskop nach einem der Ansprüche 1-11, **dadurch gekennzeichnet, dass** die Justagetoleranz bzgl. der Öffnung (32) der Aperturblende (34) kleiner als 3 µm, vorzugsweise kleiner als 2 µm, ist.

## Claims

1. Microscope, particularly confocal microscope, for the single-molecule spectroscopy, comprising
a specimen holding device for holding a specimen (18),
an illuminating unit (10),
an optics unit (12) directing radiation produced by the illuminating unit (10) toward the specimen (18) and directing radiation given off by the specimen (18) toward a detector unit (20),
an aperture diaphragm (34) arranged in the beam path in front of the detector unit (20), and
a focusing lens (30) arranged in the beam path in front of the aperture diaphragm (34),
**characterized in**
**that** the focusing lens (30) is vertically adjustable with respect to its optical axis.

2. Microscope according to claim 1, **characterized in that** the focusing lens (30) is additionally adjustable in the direction of its optical axis.

3. Microscope according to claim 1 or 2, **characterized in that** the optics unit (12) comprises a beam splitter (26) for directing the radiation and the beam splitter (26) is adapted to be tilted to align the beam path with the central axis (40) of the opening (32) of the aperture diaphragm (34).

4. Microscope according to claim 3, **characterized in that** the beam splitter (26) is exchangeable.

5. Microscope according to one of claims 1-4, **characterized in that** the focusing lens (30) is borne by linear ball bearings, parallelogram guidance and/or three-point bearing.

6. Microscope, particularly confocal microscope, for the single-molecule spectroscopy, comprising
a specimen holding device for holding a specimen,
an illuminating unit (10),
an optics unit (12) comprising a beam splitter (26), which directs radiation produced by the illuminating unit (10) toward the specimen (18) and radiation given off by the specimen (18) toward a detector unit (20),
an aperture diaphragm (34) arranged in the beam path in front of the detector unit (20), and
a stationary focusing lens (30) arranged in the beam path in front of the aperture diaphragm (34),
**characterized in**
**that** the beam splitter (26) is adapted to be tilted to align the radiation given off by the specimen (19) with the central axis (40) of the opening of the aperture diaphragm (34).

7. Microscope according to one of claims 1-6, **characterized in that** the aperture diaphragm (34) is displaceable exclusively in longitudinal direction of the beam path for adjusting the distance between the focusing lens (30) and the aperture diaphragm (34).

8. Microscope according to one of claims 1-7, **characterized in that** the aperture diaphragm (34) is rotatable about its central axis (40).

9. Microscope according to one of claims 1-6, **characterized in that** the aperture diaphragm (34) is stationary.

10. Microscope according to one of claims 1-9, **characterized in that** the opening (32) of the aperture diaphragm (34) is circular or split-shaped.

11. Microscope according to one of claims 1-10, **characterized in that** the focusing lens (30) and/or beam splitter (26) are connected with an adjusting mechanism for automatic adjustment.

12. Microscope according to one of claims 1-11, **characterized in that** the adjusting tolerance with respect to the opening (32) of the aperture diaphragm (34) is smaller than 3 µm, preferably smaller than 2 µm.

## Revendications

1. Microscope, et notamment un microscope confocal destiné à la spectroscopie de molécules uniques, comprenant :
un système de réception d'échantillon pour recevoir un échantillon (18),
une unité d'éclairage (10),
une unité d'optique (12), qui dirige le rayonnement généré par l'unité d'éclairage (10) en direction de l'échantillon (18) et le rayonnement émis depuis l'échantillon (18) en direction d'une unité de détection (20),
un diaphragme d'ouverture (34) disposé dans le parcours optique avant l'unité de détection (20) et
une lentille de focalisation (30) disposée dans le parcours optique avant le diaphragme d'ouverture (34),
**caractérisé en ce que**,
la lentille de focalisation (30) peut être réglée en position perpendiculairement par rapport à son axe optique.

2. Microscope selon la revendication 1,
**caractérisé en ce que**
la lentille de focalisation (30) peut également être réglée en position en direction de son axe optique.

3. Microscope selon la revendication 1 ou 2,
**caractérisé en ce que**
l'unité d'optique (12) permettant de diriger le rayonnement présente un diviseur de faisceau (26), ce diviseur de faisceau (26) pouvant être basculé pour orienter le parcours optique sur l'axe médian (40) de l'ouverture (32) du diaphragme d'ouverture (34).

4. Microscope selon la revendication 3,
**caractérisé en ce que**
le diviseur de faisceau (26) est amovible.

5. Microscope selon l'une des revendications 1 à 4,
**caractérisé en ce que**
la lentille de focalisation (30) est montée par un roulement à billes linéaire, une suspension à parallélogramme et/ou un système de positionnement à trois points.

6. Microscope, et notamment un microscope confocal destiné à la spectroscopie de molécules uniques, comprenant :
un système de réception d'échantillon pour recevoir un échantillon,
une unité d'éclairage (10),
une unité d'optique (12) présentant un diviseur de faisceau (26), unité qui dirige le rayonnement généré par l'unité d'éclairage (10) en direction de l'échantillon (18) et le rayonnement émis depuis l'échantillon (18) en direction d'une unité de détection (20),
un diaphragme d'ouverture (34) disposé dans le parcours optique avant l'unité de détection (20) et
une lentille de focalisation (30) fixe disposée dans le parcours optique avant le diaphragme d'ouverture (34),
**caractérisé en ce que**
le séparateur de faisceau (26) peut être basculé pour orienter le rayonnement émis par l'échantillon (19) sur l'axe médian (40) de l'ouverture du diaphragme d'ouverture (34).

7. Microscope selon l'une des revendications 1 à 6,
**caractérisé en ce que**
le diaphragme d'ouverture (34) peut être exclusivement déplacé dans la direction longitudinale du parcours optique afin de pouvoir régler la distance entre la lentille de focalisation (30) et le diaphragme d'ouverture (34).

8. Microscope selon l'une des revendications 1 à 7,
**caractérisé en ce que**
le diaphragme d'ouverture (34) peut pivoter autour de son axe médian (40).

9. Microscope selon l'une des revendications 1 à 6,
**caractérisé en ce que**
le diaphragme d'ouverture (34) est fixe.

10. Microscope selon l'une des revendications 1 à 9,
**caractérisé en ce que**
l'ouverture (32) du diaphragme d'ouverture (34) est circulaire ou en forme de fente.

11. Microscope selon l'une des revendications 1 à 10,
**caractérisé en ce que**
la lentille de focalisation (30) et/ou le diviseur de faisceau (26) est relié(e) à un mécanisme d'ajustement permettant un ajustage automatique.

12. Microscope selon l'une des revendications 1 à 11,
**caractérisé en ce que**
la tolérance d'ajustage relative à l'ouverture (32) du diaphragme d'ouverture (34) est inférieure à 3 µm, de préférence inférieure à 2 µm.
